(19) **Europäisches Patentamt / European Patent Office / Office européen des brevets**

(11) **EP 1 415 174 B1**

(12) **EUROPEAN PATENT SPECIFICATION**

| | |
|---|---|
| (45) Date of publication and mention of the grant of the patent: **03.12.2014 Bulletin 2014/49** | (51) Int Cl.: **G01S 5/02** (2010.01) |
| (21) Application number: **02755437.7** | (86) International application number: **PCT/IB2002/003158** |
| (22) Date of filing: **22.07.2002** | (87) International publication number: **WO 2003/010552 (06.02.2003 Gazette 2003/06)** |

(54) **Method for determining the position of a mobile communications device and corresponding device**

VERFAHREN UND ZUR FUNKORTUNG EINES MOBILFUNKGERÄTS SOWIE ENTSPRECHENDES MOBILFUNKGERÄT

PROCEDE PERMETTANT DE DETERMINER LA POSITION D'UN DISPOSITIF DE COMMUNICATION MOBILE ET DISPOSITIF CORRESPONDANT

| | |
|---|---|
| (84) Designated Contracting States: **AT BE BG CH CY CZ DE DK EE ES FI FR GB GR IE IT LI LU MC NL PT SE SK TR** | (74) Representative: **Damen, Daniel Martijn et al Philips Intellectual Property & Standards P.O. Box 220 5600 AE Eindhoven (NL)** |
| (30) Priority: **24.07.2001 GB 0117951** | |
| (43) Date of publication of application: **06.05.2004 Bulletin 2004/19** | (56) References cited: **WO-A-02/23215 WO-A-98/10307 US-A- 5 526 001 US-A- 5 982 324 US-A- 6 166 685** |
| (73) Proprietor: **Koninklijke Philips N.V. 5656 AE Eindhoven (NL)** | |
| (72) Inventor: **MERGLER, lwo-Martin NL-5656 AA Eindhoven (NL)** | |

**Description**

This invention relates to a method, according to claim 1, and corresponding apparatus, according to claim 5 for determining the position of a mobile communications device.

In order to provide a GPS position fix, a typical GPS receiver needs to receive at least 4 GPS signals and thus must have at least 4 GPS satellites in view. Unfortunately, however, in areas where there is significant foliage or in an urban canyon, there can often be less than 4 satellites in view at any one time. Furthermore, when the GPS receiver is moving, e.g. when in the possession of a user travelling in a car, the number satellites in view and which satellites are in view may change rapidly.

It is known from at least related US patents 5982324, 6236359 and 6249245 to provide a mobile cellular telephone incorporating a GPS receiver and to use ranging measurements between the mobile telephone and a cellular network base station to which it is registered to supplement pseudoranges obtained by the GPS receiver for the purposes of obtaining a position fix when there are less than 4 GPS satellites in view. Such an arrangement requires that the position of the base station be known and where the position of the mobile telephone is determined at telephone, that the position of the base station be transmitted to the telephone. However, if the position of a base station is unknown or, where the position is determined in the telephone, the position of the base station is not transmitted to the mobile telephone, such ranging between the base station and the telephone is worthless.

WO 98/10307 discloses a location system for commercial wireless telecommunication infrastructures. The system is an end-to-end solution having one or more location centers for outputting requested locations of commercially available handsets or mobile stations based on, e.g., CDMA, AMPS, NAMPS or TDMA communication standards, for processing both local MS location requests and more global MS location requests via, e.g., Internet communication between a distributed network of location centers. The system uses a plurality of MS locating technologies including those based on: (1) two-way TOA and TDOA; (2) pattern recognition; (3) distributed antenna provisioning; and (4) supplemental information from various types of very low cost non-infrastructure base stations for communicating via a typical commercial wireless base station infrastructure or a public telephone switch network.

US 6,166,685 discloses a method and apparatus for tracking the position of a mobile unit in a mobile radio communication system using information from earth-orbiting satellites and information received from the infrastructure of the system. The infrastructure consists of equipment associated with transmitting and receiving voice or data traffic to and from the mobile phone. An initial position of the mobile unit is calculated using measurements from earth-orbiting satellites. Next, one or more range measurements are made using signals transmitted between the mobile unit and the infrastructure. A positional difference between the initial position and a current position of the mobile station is estimated using the one or more range measurements, wherein only range measurements made from signals transmitted between the mobile unit and the infrastructure are used to perform the estimating. An accuracy value is next determined for the estimated positional measurement, and the accuracy value is compared to a threshold to determine whether the estimated positional measurement has an acceptable accuracy. If the estimated positional measurement has an acceptable accuracy, then the initial position of the mobile unit is updated using the estimated positional measurement and the process is repeated using only range measurements made from signals transmitted between the mobile unit and the infrastructure; otherwise, a new initial position is determined from the earth-orbiting satellites and the process is repeated.

US 5,526,001 discloses the use of bearing rate of change, or equivalently bearing differences, to estimate emitter geolocation, in contrast to using such rates or differences to estimate only range. In using the bearing differences, it is not necessary to maintain the same relative bearing to compensate for DOA dependant errors.

It is an object of the present invention to provide a method, according to claim 1, and corresponding apparatus, according to claim 5, for determining the position of a mobile communication device.

According to a first aspect of the present invention, a method of determining the position of a mobile communications device is provided comprising the steps of: (a) determining the position of at least one transmitter located in the vicinity of the mobile communications device, each by a method comprising the steps of: (i) moving the mobile communications device to a plurality of reference locations; (ii) determining the position of the mobile communications device from signals received either by a GPS receiver or from a terrestrial positioning system and determining the range from the mobile communications device to a transmitter at each reference location; and (iii) determining the position of that transmitter using the positions of the mobile communications device and the corresponding ranges determined in step (ii), characterised in that the at least one transmitter is a cellular telephone network base station and the mobile communications device is a mobile telephone registered with that base station and characterised by the following step: (c) determining a further position of the mobile communications device using the position of the or each transmitter determined in step (a).

For the avoidance of doubt, "reference location" is not intended to convey the meaning that the location is somehow fixed or predetermined, but rather that once its position in step (a)(ii) is determined, it is a reference location with respect to which the position of the transmitter is determined in step (a)(iii).

According to the method the determined location of a transmitter is used as reference to subsequently determine a further location of the mobile communications device.

According to an embodiment the method comprises the step of (b) determining the range from the mobile communications device to the or each transmitter; and in step (c) determining the further position using the position of the or each transmitter determined in step (a) and the or each range determined in step (b).

The positions of the mobile communications device in step (a)(ii) may be determined using a GPS receiver and where this is the case, the position of the mobile communications device may be determined in step (c) using a combination of pseudoranges obtained using the GPS receiver, the position of the or each transmitter determined in step (a) and the or each range determined in step (b). This is convenient where, during step (c), the GPS receiver is not able to obtain an unambiguous position fix by itself.

Also provided in accordance with the present invention is a mobile communications device according to any of claims 6 to 9.

Apparatus employing a method of positioning according to the present invention will now be described, by way of example only, with reference to the accompanying drawings in which:

Figure 1 shows the geographic layout of a cellular telephone network;
Figure 2 shows the configuration of mobile cellular telephone MS1 in greater detail;
Figure 3 illustrates ranging between fixed base station BS1 and mobile telephone MS1 at locations p1, p2, p3 and p4; and
Figure 4 illustrates ranging between mobile telephone MS1 and base stations BS1, BS2, BS3 and BS4.

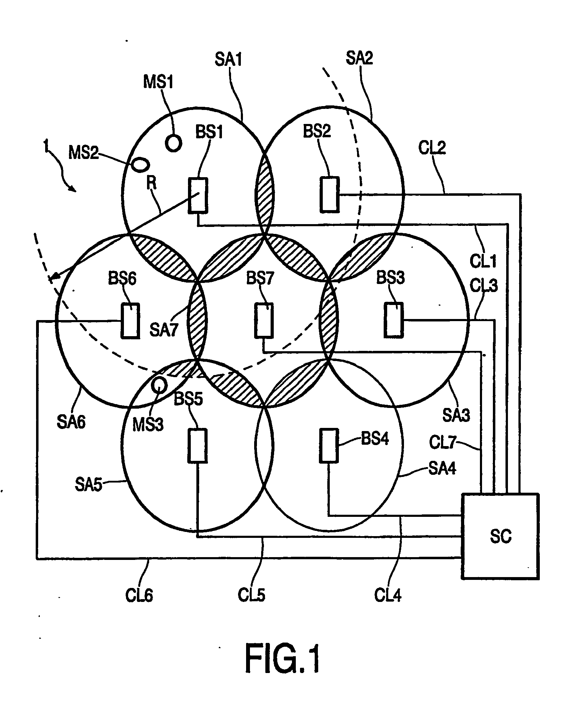

The geographical layout of a conventional GSM cellular telephone network 1 is shown schematically in figure 1. The network comprises a plurality of base stations BS of which seven, BS1 to BS7, are shown, situated at respective, mutually spaced geographic locations. Each of these base stations comprises the entirety of a radio transmitter and receiver operated by a trunking system controller at any one site or service area. The respective service areas SA1 to SA7 of these base stations overlap, as shown by the cross hatching, to collectively cover the whole region shown. The system may furthermore comprise a system controller SC provided with a two-way communication link, CL1 to CL7 respectively, to each base station BS1 to BS7. Each of these communication links may be, for example, a dedicated land-line. The system controller SC may, furthermore, be connected to a the public switched

telephone network (PSTN) to enable communication to take place between a mobile cellular telephone MS1 and a subscriber to that network. A plurality of mobile telephones MS are provided of which three, MS1, MS2 and MS3 are shown, each being able to roam freely throughout the whole region, and indeed outside it.

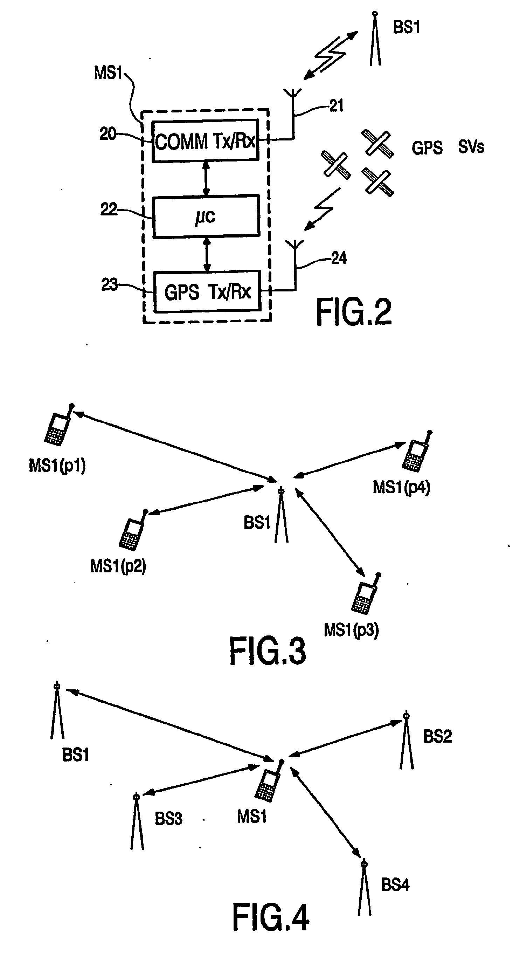

Figure 2 shows in greater detail the configuration of mobile telephone MS1 which comprises a communications transmitter and receiver (Comm Tx/Rx) 20 connected to a communications antenna 21 and controlled by a microprocessor ($\mu$c) 22 for communication with the base station BS1 with which it is registered. The design and manufacturing of such telephones for two-way communication within a cellular telephone network are well known and, as such, those parts which do not form part of the present invention will not be elaborated upon here further.

In addition to the conventional components of a mobile telephone, telephone MS1 further comprises a GPS receiver (GPS Rx) 23 connected to a GPS antenna 24 and controlled by the microprocessor ($\mu$c) 22 for receiving GPS spread spectrum signals transmitted from orbiting GPS satellites. When operative, the GPS receiver 24 may receive NAVSTAR SPS GPS signal through the GPS antenna and pre-process them, typically by passive bandpass filtering in order to minimise out-of band RF interference, preamplification, down conversion to an intermediate frequency (IF) and analog to digital conversion. The resultant, digitised IF signal remains modulated, still containing all the information from the available satellites, and is fed into a memory (not shown) of the microprocessor. The GPS signals may then be are acquired and tracked in any of several digital receiver channels, typically up to 12, for the purpose of obtaining pseudorange information from which the position of the mobile telephone can be determined using conventional navigation algorithms. Such methods for GPS signal acquisition and tracking are well known, for example, see chapter 4 (GPS satellite signal characteristics) & chapter 5 (GPS satellite signal acquisition and tracking) of GPS Principles and Applications (Editor, Kaplan) ISBN 0-89006-793-7 Artech House. The general purpose microprocessor 22 shown controls both base station communication and GPS processing, however, it will be appreciated alternative processing architectures may be employed to achieve the same result, for example, an architecture employing separate communication and GPS ICs.

Determining the location of a base station

Referring to figure 3, base station BS1 is located at unknown co-ordinate ($x_{bs1}$, $y_{bs1}$, $z_{bs1}$). Mobile telephone MS1 comprises a GPS receiver and is able to obtain position fixes using the GPS receiver at n different locations (pn) having co-ordinates ($x_{pn}$, $y_{pn}$, $z_{pn}$). At these locations, mobile telephone MS1 is able to communicate with base station BS1 with which it is registered in such a manner as to be able to obtain range measurements ($r_{pn-bs1}$) to base station BS1. Having obtained position fixes and corresponding range measurements at 3 different locations, the location of base station BS1 can be determined by resolving the following simultaneous equations:

$$(r_{p1\text{-}bs1})^2 = (x_{bs1} - x_{p1})^2 + (y_{bs1} - y_{p1})^2 + (z_{bs1} - z_{p1})^2$$

$$(r_{p2\text{-}bs1})^2 = (x_{bs1} - x_{p2})^2 + (y_{bs1} - y_{p2})^2 + (z_{bs1} - z_{p2})^2$$

$$(r_{p3\text{-}bs1})^2 = (x_{bs1} - x_{p3})^2 + (y_{bs1} - y_{p3})^2 + (z_{bs1} - z_{p3})^2$$

Whilst the above formulation requires 3 position fixes and corresponding range measurements, it is possible to make an assumption that the altitude of base station BS1 and positions p1 and p2 are the same in which case it is only 2 position fixes and corresponding range measurements taken at locations p1 and p2 are required to determine the position of base station BS1. Similarly, it is possible to take 4 or more position fixes and corresponding range measurements at different locations to provide an over-determined set of equations which can be solved using a best-fit type method. Such a method is more reliable if spurious position fixes and range measurements are likely.

Determining the location of a transmitter

Using the method above, the position of any cellular telephone network base station may be determined from which subsequent ranging measurements can be used to determine the position of the mobile unit.

Referring to figure 4, mobile telephone MS1 is presently located at unknown co-ordinate $(x_{ms}, y_{ms}, z_{ms})$ having previously determined the position of nearby base stations BS1, BS2 and BS3 having co-ordinates $(x_{bsn}, y_{bsn}, z_{bsn})$. From these base stations, mobile telephone MS1 is able to communicate with the base stations in such a manner as to be able to obtain range measurements $(r_{ms\text{-}bsn})$ to these base stations and thereby determine the location of mobile telephone MS1. For example, by resolving the following simultaneous equations:

$$(r_{p1\text{-}bs1})^2 = (x_{bs1} - x_{ms})^2 + (y_{bs1} - y_{ms})^2 + (z_{bs1} - z_{ms})^2$$

$$(r_{p2\text{-}bs1})^2 = (x_{bs2} - x_{ms})^2 + (y_{bs2} - y_{ms})^2 + (z_{bs2} - z_{ms})^2$$

$$(r_{p3\text{-}bs1})^2 = (x_{bs3} - x_{ms})^2 + (y_{bs3} - y_{ms})^2 + (z_{bs3} - z_{ms})^2$$

Again, assumptions made be made to reduce the number of determinations positions of the base stations and range measurements that need to be made. Also, more determinations may be made to provide an over-determined set of equations which can be solved using a best-fit method. As a further alternative, conventional time difference of arrival (TDOA) positioning techniques may be used to determine the position of mobile unit MS1.

The above example uses ranging to base stations at previously unknown locations as a complete substitute for GPS positioning, however, this need not be the case. For example, when the GPS receiver of MS1 is able to see 4 GPS satellites at three separate locations, the position of a single basestation, conveniently that with which mobile telephone MS1 is registered, may be determined. Then, in the event that one of the GPS satellite signals is lost, for example when entering an urban canyon, ranging to the single basestation can be used to supplement the pseudoranges derived from the remaining GPS signals in view to obtain a new position fix.

As an alternative to a GPS receiver, conventional terrestrial based positioning system is used to provide the locations pn which are used to determine the position of the base stations. For example, a mobile telephone MS1 may be deployed in a network of short range information beacons which broadcast their position. When in range of a particular beacon the broadcasted position can be used as an estimate of the position pn of mobile telephone MS1.

Whilst the invention has been described with the primary commercial application of positioning mobile telephones, it will be appreciated other devices including dedicated positioning units could employ such method of positioning.

From a reading of the present disclosure, other modifications will be apparent to the skilled person and may involve other features which are already known in the design, manufacture and use of both GPS receivers and mobile communications devices, and component parts thereof, and which may be used instead of or in addition to features already described herein.

**Claims**

1. A method of determining the position of a mobile communications device (MS1) comprising the steps of:

   (a) determining the position of at least one transmitter (BS1) located in the vicinity of the mobile communications device (MS1), each by a method comprising the steps of:

   (i) moving the mobile communications device (MS1) to a plurality of reference locations (p$n$);
   (ii) determining the position of the mobile communications device (MS1) from signals received by a GPS receiver or from a terrestrial based positioning system and determining the range from the mobile communications device to that transmitter at each reference location; and
   (iii) determining the position of that transmitter using the positions of the mobile communications device (MS1) and the corresponding ranges determined in step (ii), **characterised in that** the at least one transmitter (BS1) is a cellular telephone network base station and the mobile communications device (MS1) is a mobile telephone registered with that base station and **characterised by** the following step:

   (c) determining a further position of the mobile communications device (MS1) using the position of the or each transmitter (BS1) determined in step (a).

2. A method according to claim 1 comprising the step of
   in step (c) determining the further position using the position of the or each transmitter determined in step (a) and the or each range determined in a step (d):

   (d) determining the range from the mobile communications device (MS1) to the or each transmitter (BS1);

3. A method according to claim 2 wherein the position of the mobile communications device (MS1) is determined in step (c) using a combination of pseudoranges obtained using the GPS receiver (23), the position of the or each transmitter determined in step (a) and the or each range determined in step (d).

4. A method according to claim 3 wherein the position of the mobile communications device (MS 1) in step (c) is determined when the GPS receiver (23) is not able to obtain an unambiguous position fix by itself.

5. A mobile communications device (MS1)) comprising positioning means (22, 23,24) for determining positions of the mobile communications device (MS1) at a plurality of reference locations (p$n$) from signals received by a GPS receiver or from a terrestrial positioning system, ranging means (20, 21, 22) for determining ranges from the mobile communications device (MS1) to a transmitter (BS1) located in the vicinity at the plurality of reference locations (p$n$); and processing means (22) configured to determine the position of the transmitter (BS1) using positions of the mobile communications device (MS1) determined by the positioning means (22, 23, 24) and corresponding ranges determined by the ranging means (20,21,22), **characterised in that** the transmitted (BS1) is a cellular telephone network base station and the mobile communications device (MS1) is a mobile telephone registered with that base station and **in that** the processing means (22) is further configured to determine a further position of the mobile communications device (MS 1) using the position of the transmitter (BS 1) determined by the processing means (22).

6. A device according to claim 4 or claim 5 wherein the processing means (22) is configured to determine the further position of the mobile communications device (MS 1) using the position of at least one transmitter (BS1) determined by the processing means (22) and a corresponding range or ranges determined by the ranging means (20, 21, 22).

7. A device according to claim 6 wherein the positioning means (22, 23, 24) comprises a GPS receiver (23) and the processing means (22) is configured to determine the further position of the mobile communications device (MS 1) using a combination of pseudoranges obtained by the GPS receiver (23), the position of at least one transmitter (BS1) determined by the processing means (22) and a corresponding range or ranges determined by the ranging means (20, 21, 22).

**Patentansprüche**

1. Verfahren zur Bestimmung der Position eines Mobilfunkgerätes (MSI), das die folgenden Schritte umfasst:

   (a) Bestimmen der Position von zumindest einem Sender (BSI), der sich in der Nähe des Mobilfunkgerätes (MSI) befindet, jeweils durch ein Verfahren, das die folgenden Schritte umfasst:

   (i) Bewegen des Mobilfunkgerätes (MSI) an eine Vielzahl von Referenzpunkten (p$n$),
   (ii) Bestimmen der Position des Mobilfunkgerätes (MSI) aus den durch einen GPS-Empfänger oder von einem terrestrischen Positionsbestimmungssystem empfangenen Signalen und Bestimmen der Entfernung zwischen dem Mobilfunkgerät und diesem Sender an jedem Referenzpunkt und
   (iii) Bestimmen der Position dieses Senders unter Verwendung der Positionen des Mobilfunkgerätes (MSI) und der entsprechenden, in Schritt (ii) bestimmten Entfernungen, **dadurch gekennzeichnet, dass** der zumindest eine Sender (BSI) eine Basisstation eines Mobilfunknetzes ist und dass das Mobilfunkgerät (MSI) ein Mobiltelefon ist, das an der Basisstation angemeldet ist, und **gekennzeichnet durch** den folgenden Schritt:

   (c) Bestimmen einer weiteren Position des Mobilfunkgerätes (MSI) unter Verwendung der Position des oder jedes in Schritt (a) bestimmten Senders (BSI).

2. Verfahren nach Anspruch 1, das den folgenden Schritt in Schritt (c) der Bestimmung einer weiteren Position unter Verwendung der Position des oder jedes in Schritt (a) bestimmten Senders und der oder jeder in einem Schritt (d) bestimmten Entfernung umfasst:

   (d) Bestimmen der Entfernung zwischen dem Mobilfunkgerät (MSI) und dem oder jedem Sender (BSI).

3. Verfahren nach Anspruch 2, wobei die Position des Mobilfunkgerätes (MSI) in Schritt (c) unter Verwendung einer Kombination aus Pseudostrecken, die mithilfe des GPS-Empfängers (23) erzielt werden, der Position des oder jedes in Schritt (a) bestimmten Senders und der oder jeder in Schritt (d) bestimmten Entfernung bestimmt wird.

4. Verfahren nach Anspruch 3, wobei die Position des Mobilfunkgerätes (MSI) in Schritt (c) bestimmt wird, wenn der GPS-Empfänger (23) nicht in der Lage ist, selbst einen eindeutigen Fixpunkt zu erhalten.

5. Mobilfunkgerät (MSI) mit Positionsbestimmungsmitteln (22, 23, 24) zur Bestimmung von Positionen des Mobilfunkgerätes (MSI) an einer Vielzahl von Referenzpunkten (p$n$) aus den durch einen GPS-Empfänger oder von einem terrestrischen Positionsbestimmungssystem empfangenen Signalen, Entfernungsbestimmungsmitteln (20, 21, 22) zur Bestimmung von Entfernungen zwischen dem Mobilfunkgerät (MSI) und einem Sender (BSI), der sich in der Nähe zu der Vielzahl von Referenzpunkten (p$n$) befindet, und Verarbeitungsmitteln (22), die so konfiguriert sind, dass sie die Position des Senders (BSI) unter Verwendung der Positionen des Mobilfunkgerätes (MSI), die durch die Positionsbestimmungsmittel (22, 23, 24) bestimmt werden, und entsprechender Entfernungen, die durch die Entfernungsbestimmungsmittel (20, 21, 22) bestimmt werden, bestimmen,
   **dadurch gekennzeichnet, dass** der Sender (BSI) eine Basisstation eines Mobilfunknetzes ist und dass das Mobilfunkgerät (MSI) ein Mobiltelefon ist, das bei der Basisstation angemeldet ist, und dass die Verarbeitungsmittel (22) ferner so konfiguriert sind, dass sie eine weitere Position des Mobilfunkgerätes (MSI) unter Verwendung der Position des Senders (BSI) bestimmen, die von den Verarbeitungsmitteln (22) bestimmt wird.

6. Vorrichtung nach Anspruch 4 oder 5, wobei die Verarbeitungsmittel (22) so konfiguriert sind, dass sie die weitere Position des Mobilfunkgerätes (MSI) unter Verwendung der Position von zumindest einem Sender (BSI), die durch die Verarbeitungsmittel (22) bestimmt wird, und einer entsprechenden Entfernung oder entsprechenden Entfernungen, die von den Entfernungsbestimmungsmitteln (20, 21, 22) bestimmt werden, bestimmen.

7. Vorrichtung nach Anspruch 6, wobei die Positionsbestimmungsmittel (22, 23, 24) einen GPS-Empfänger (23) umfassen und die Verarbeitungsmittel (22) so konfiguriert sind, dass sie die weitere Position des Mobilfunkgerätes (MSI) unter Verwendung einer Kombination aus Pseudostrecken, die mithilfe des GPS-Empfängers (23) erhalten werden, der Position von zumindest einem Sender (BSI), die durch die Verarbeitungsmittel (22) bestimmt wird, und einer entsprechenden Entfernung oder entsprechenden Entfernungen, die durch die Entfernungsbestimmungsmittel (20, 21, 22) bestimmt werden, bestimmen.

## Revendications

1. Procédé de détermination de la position d'un dispositif de communication mobile (MS1) comprenant l'étape de :

   (a) la détermination de la position d'au moins un transmetteur (BS1) situé dans le voisinage du dispositif de communication mobile (MS1), chacun par un procédé comprenant les étapes de :

   (i) le déplacement du dispositif de communication mobile (MS1) jusqu'à une pluralité d'emplacements de référence (p*n*) ;
   (ii) la détermination de la position du dispositif de communication mobile (MS1) à partir de signaux reçus par un récepteur GPS ou à partir d'un système de localisation à base terrestre et la détermination de la distance du dispositif de communication mobile à ce transmetteur à chaque emplacement de référence ; et
   (iii) la détermination de la position de ce transmetteur en utilisant les positions du dispositif de communication mobile (MS1) et les distances correspondantes déterminées dans l'étape (ii), **caractérisé en ce que** l'au moins un transmetteur (BS1) est une station de base de réseau de téléphonie cellulaire et le dispositif de communication mobile (MS1) est un téléphone mobile enregistré auprès de cette station de base et **caractérisé par** l'étape suivante :

   (c) la détermination d'une position supplémentaire du dispositif de communication mobile (MS1) en utilisant la position du ou de chaque émetteur (BS1) déterminée dans l'étape (a).

2. Procédé selon la revendication 1, comprenant l'étape de, dans l'étape (c), la détermination de la position supplémentaire en utilisant la position du ou de chaque émetteur déterminée dans l'étape (a) et la ou chaque distance déterminée dans une étape (d) :

   (d) la détermination de la distance du dispositif de communication mobile (MS1) au ou à chaque émetteur (BS1).

3. Procédé selon la revendication 2, dans lequel la position du dispositif de communication mobile (MS1) est déterminée dans l'étape (c) en utilisant une association de pseudo-distances obtenues en utilisant le récepteur GPS (23), de la position du ou de chaque émetteur déterminée dans l'étape (a) et de la ou chaque distance déterminée dans l'étape (d).

4. Procédé selon la revendication 3, dans lequel la position du dispositif de communication mobile (MS1) dans l'étape (c) est déterminée lorsque le récepteur GPS (23) n'est pas capable d'obtenir un point fixe de localisation défini par lui-même.

5. Dispositif de communication mobile (MS1) comprenant des moyens de localisation (22, 23, 24) pour déterminer des positions du dispositif de communication mobile (MS1) à une pluralité d'emplacements de référence (p*n*) à partir de signaux reçus par un récepteur GPS à partir d'un système de localisation terrestre, des moyens télémétriques (20, 21, 22) pour déterminer des distances du dispositif de communication mobile (MS1) à un émetteur (BS1) situé dans le voisinage à la pluralité d'emplacements de référence (p*n*) ; et des moyens de traitement (22) configurés pour déterminer la position du transmetteur (BS1) en utilisant des positions du dispositif de communication mobile (MS1) déterminées par les moyens de localisation (22, 23, 24) et des distances correspondantes déterminées par les moyens télémétriques (20, 21, 22), **caractérisé en ce que** le transmetteur (BS1) est une station de base de réseau de téléphonie cellulaire et le dispositif de communication mobile (MS1) est un téléphone mobile enregistré auprès de cette station de base et **en ce que** les moyens de traitement (22) sont en outre configurés pour déterminer une position supplémentaire du dispositif de communication mobile (MS1) en utilisant la position du transmetteur (BS1) déterminée par les moyens de traitement (22).

6. Dispositif selon la revendication 4 ou la revendication 5, dans lequel les moyens de traitement (22) sont configurés pour déterminer la position supplémentaire du dispositif de communication mobile (MS1) en utilisant la position d'au moins un transmetteur (BS1) déterminée par les moyens de traitement (22) et une distance ou des distances correspondantes déterminées par les moyens télémétriques (20, 21, 22).

**7.** Dispositif selon la revendication 6, dans lequel les moyens de localisation (22, 23, 24) comprennent un récepteur GPS (23) et les moyens de traitement (22) sont configurés pour déterminer la position supplémentaire du dispositif de communication mobile (MS1) en utilisant une association de pseudo-distances obtenues par le récepteur GPS (23), de la position d'au moins un transmetteur (BS1) déterminée par les moyens de traitement (22) et d'une distance ou des distances correspondantes déterminées par les moyens télémétriques (20, 21, 22).

FIG.1

FIG.2

FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5982324 A
- US 6236359 B
- US 6249245 B

- WO 9810307 A
- US 6166685 A
- US 5526001 A